# EUROPÄISCHE PATENTANMELDUNG

(11) **EP 1 284 119 A2**
(43) Veröffentlichungstag der Anmeldung: **19.02.2003**
(21) Anmeldenummer: 02017178.1
(22) Anmeldetag: 31.07.2002
(51) Int. Cl.: A47K 3/28, F24J 2/34, F24J 2/04, A47C 1/14

(54) **Vorrichtung zur Abgabe von erwärmten Wasser sowie Vorrichtung zur Warmwassererzeugung**

(30) Priorität: 09.08.2001 DE 20113248 U; 27.07.2002 DE 20211353 U
(71) Anmelder: von Fintel-Jo, Bettina, 21354 Bleckede (DE)
(72) Erfinder: von Fintel-Jo, Bettina, 21354 Bleckede (DE)
(74) Vertreter: Klickow, Hans-Henning

(57) **Zusammenfassung**

Die Vorrichtung dient zur Abgabe von erwärmtem Wasser und weist eine Wasserversorgung und mindestens einen Sprühkopf auf. Der Sprühkopf ist von einer Anschlußleitung mit einem Grundkörper verbunden. Der Grundkörper weist mindestens bereichsweise eine Gestaltung entsprechend einer Skulptur auf. Eine Vorrichtung zur Warmwassererzeugung kann mit einer Leitung zur Wärmeabgabe versehen werden, die im Bereich eines Sitzelementes eines Strandkorbes angeordnet ist. Insbesondere ist es möglich, die Vorrichtung zur Warmwassererzeugung mit der Vorrichtung zur Abgabe von erwärmtem Wasser zu koppeln.

## Beschreibung

Die Erfindung betrifft eine Vorrichtung zur Abgabe von erwärmtem Wasser, die eine Wasserversorgung und mindestens einen Sprühkopf aufweist, der von einer Anschlußleitung mit einem Grundkörper verbunden ist.

Die Erfindung betrifft darüber hinaus eine Vorrichtung zur Warmwassererzeugung, die mindestens eine Kollektorfläche zur Aufnahme von Sonnenenergie sowie mindestens einen Speicher zur Bevorratung von Wasser aufweist und die mit mindestens einer Leitung für erwärmtes Wasser versehen ist.

Derartige Vorrichtungen zur Abgabe von erwärmtem Wasser sind gemäß dem Stand der Technik als Duscheinrichtungen konstruiert, die an geeignete Warmwasserversorgungen angeschlossen werden. Die Verwendung derartiger Konstruktionen ist im wesentlichen auf Gebäude oder eine Umgebung von Gebäuden beschränkt, darüber hinaus unterliegt die ästhetische Gestaltung dieser Vorrichtungen erheblichen Einschränkungen.

Aufgabe der vorliegenden Erfindung ist es, eine Vorrichtung der einleitend genannten Art derart zu gestalten, daß eine vergrößerte Nutzungsflexibilität sowie eine ansprechende äußere Gestaltung erreicht wird.

Diese Aufgabe wird erfindungsgemäß dadurch gelöst, daß der Grundkörper mindestens bereichsweise eine Gestaltung entsprechend einer Skulptur aufweist.

Weitere Aufgabe der vorliegenden Erfindung ist es, eine Vorrichtung der einleitend an zweiter Stelle genannten Art derart zu gestalten, daß zusätzliche Anwendungsgebiete erschlossen werden und insbesondere in einfacher Weise eine Kombinierbarkeit mit der einleitend an erster Stelle genannten Vorrichtung durchführbar ist.

Diese Aufgabe wird erfindungsgemäß dadurch gelöst, daß die Leitung mindestens zum Teil im Bereich eines Sitzelementes eines Strandkorbes angeordnet ist.

Die Gestaltung des Grundkörpers in Form einer Skulptur kann beispielsweise als Nachbildung eines Tieres oder als abstraktes Gebilde erfolgen. Ebenfalls ist es denkbar, die Skulptur als stilisierte Pflanze, beispielsweise als Baum, zu gestalten. Sowohl im Hinblick auf die konkrete räumliche Realisierung als auch im Hinblick auf die thermische Aufbereitung des abzugebenden Wassers liegt ein erheblicher konstruktiver Freiraum vor.

Die Anordnung der Leitung im Bereich der Sitzfläche eines Strandkorbes ermöglicht eine Anwendung in unmittelbarer örtlicher Nähe zu typischen Verwendungen der Vorrichtung zur Abgabe von erwärmtem Wasser. Hierdurch ist es zum einen möglich, die Vorrichtungen unabhängig voneinander zu betreiben, insbesondere ist aber auch daran gedacht, die beiden Einzelvorrichtungen zu einer Gesamtanlage miteinander zu kombinieren. Hierdurch kann beispielsweise ein gemeinsamer Kollektor sowie ein gemeinsamer Speicher vorgesehen sein, und damit können die Investitionskosten reduziert werden.

Zur Bereitstellung des erwärmten Wassers wird vorgeschlagen, daß der Grundkörper mit einer Wassererwärmungseinrichtung gekoppelt ist.

Eine umweltschonende Konstruktion kann dadurch bereitgestellt werden, daß der Grundkörper mit einem Solarkollektor gekoppelt ist.

Ebenfalls ist daran gedacht, daß der Grundkörper mit einer thermischen Heizung gekoppelt ist.

Alternativ ist es auch möglich, daß der Grundkörper mit einer Kühlwasseranlage eines Kraftwerkes verbunden ist.

In Abhängigkeit von den örtlichen Gegebenheiten ist es auch möglich, daß der Grundkörper mit einer Methangasanlage gekoppelt ist.

Ein gleichmäßiger Benutzungskomfort auch bei wechselhaften Umgebungsbedingungen wird dadurch unterstützt, daß der Grundkörper mit einem Wasserspeicher gekoppelt ist.

Ein kompakter Aufbau kann dadurch erreicht werden, daß der Speicher innerhalb des Grundkörpers angeordnet ist.

Die Erwärmung des Wassers wird dadurch verbessert, daß im oder unter dem Innenraum des Grundkörpers ein Heizungselement installiert ist.

Die Erwärmung des Wassers wird dadurch vereinfacht, daß ein sekundärer Speicher Natriumsulfat enthält.

Zur Vermeidung von Wärmeverlusten wird vorgeschlagen, daß der Grundkörper mindestens bereichsweise eine Ummantelung aus einem Isoliermaterial aufweist.

Eine Anpassung an individuelle Benutzungsanforderungen erfolgt dadurch, daß die Anschlußleitung mit mindestens einem Regulierventil gekoppelt ist.

Insbesondere ist auch daran gedacht, daß das Regulierventil als ein Mischventil ausgebildet ist.

Zur Erhöhung der Gestaltungsmöglichkeiten bei einer Aufstellung der Vorrichtung wird vorgeschlagen, daß der Solarkollektor räumlich getrennt vom Grundkörper angeordnet ist.

Die Menge an abgebbarem warmen Wasser bei gleichzeitigem kompakten Aufbau der Vorrichtung kann dadurch erhöht werden, daß im Bereich des Wasserspeichers ein Wärmeträgermaterial angeordnet ist.

Eine vorteilhafte Materialauswahl besteht darin, daß das Wärmeträgermaterial aus Glas ausgebildet ist.

Unter Umweltgesichtspunkten ist insbesondere auch daran gedacht, daß das Wärmeträgermaterial aus Altglas ausgebildet ist.

Eine besonders hohe Fähigkeit zur Wärmespeicherung kann dadurch bereitgestellt werden, daß das Wärmeträgermaterial aus einem keramischen Material ausgebildet ist.

Eine besonders hohe Fähigkeit zur Wärmespeicherung kann dadurch erreicht werden, daß Natriumsulfat innerhalb eines Sekundärkreislaufes eingesetzt wird.

Ein angenehmer Sitzkomfort wird dadurch bereitgestellt, daß das Sitzelement mindestens eine Sitzfläche aufweist.

Der Sitzkomfort kann ebenfalls dadurch erhöht werden, daß das Sitzelement mindestens eine Rückenlehne aufweist.

Eine ausreichende Wärmeabgabe wird dadurch unterstützt, daß die Leitung mindestens bereichsweise als Heizschlange ausgebildet ist.

Eine kompakte Konstruktion bei gleichzeitig günstiger Ausrichtung des Kollektors kann dadurch erreicht werden, daß der Kollektor im Bereich eines Daches des Strandkorbes angeordnet ist.

Eine erhöhte Heizkapazität wird dadurch bereitgestellt, daß ein zusätzlicher Fotovoltaikkollektor verwendet ist.

Eine kompakte Anordnung und eine hohe Standsicherheit werden dadurch unterstützt, daß der Speicher im Bereich eines Sockels des Strandkorbes angeordnet ist.

Zur Bereitstellung einer verbesserten thermischen Steuerungsmöglichkeit wird vorgeschlagen, daß der Speicher in einen Warmwasserteil und einen Kaltwasserteil separiert ist.

Eine ausreichende Durchströmung der zum Wärmeaustausch vorgesehenen Bauelemente wird dadurch erreicht, daß für eine Wasserumwälzung mindestens eine Pumpe verwendet ist.

Eine zusätzliche thermische Steuerungsmöglichkeit wird dadurch bereitgestellt, daß zur Temperatursteuerung mindestens ein Ventil verwendet ist.

In der Zeichnung sind Ausführungsbeispiele der Erfindung schematisch dargestellt. Es zeigen:
- Fig. 1:: eine Prinzipdarstellung eines Grundkörpers in Form eines Elefanten mit einem Sprühkopf, der am Ende eines schlauchartigen Rüssels angeordnet ist,
- Fig. 2:: eine perspektivische Darstellung eines Solardaches zur Wassererwärmung,
- Fig. 3:: eine perspektivische Darstellung einer Solardusche mit einer Gestaltung ähnlich einem Baum und
- Fig. 4:: eine Vorrichtung zur Warmwassererzeugung, bei der eine Leitung für das erwärmte Wasser im Bereich eines Sitzelementes eines Strandkorbes angeordnet ist.

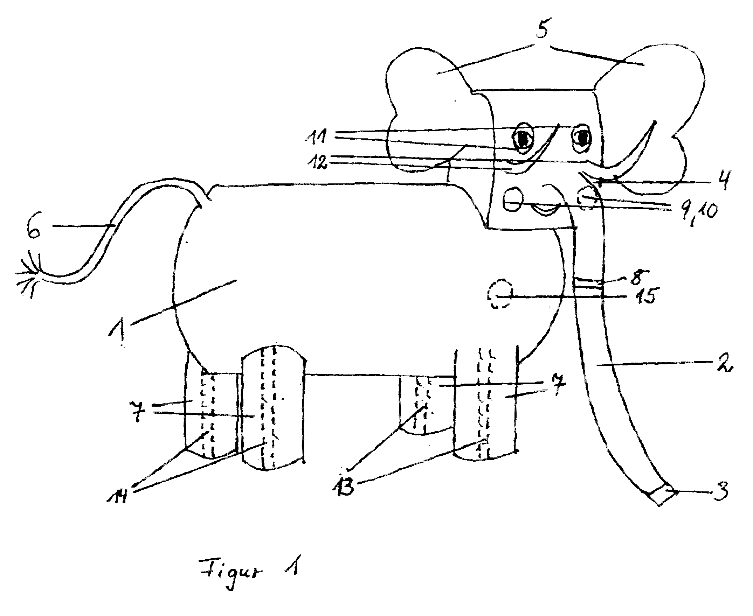

Die Vorrichtung zur Abgabe von erwärmtem Wasser besteht gemäß der Ausführungsform in Fig. 1 aus einem Grundkörper (1), der über eine Anschlußleitung (2) mit einem Sprühkopf (3) verbunden ist. Der Grundkörper (1) weist bei der dargestellten Ausführungsform eine Gestaltung in Form einer Skulptur auf, die in Form eines Elefanten realisiert ist. Der Grundkörper (1) bildet hierbei den Rumpf des Elefanten aus, die Anschlußleitung (2) ist in Form eines Rüssels realisiert. Die Anschlußleitung (2) mündet im Bereich ihrer dem Sprühkopf (3) abgewandten Ausdehnung in einen Kopf (4) ein. Der Kopf (4) trägt seitlich Ohren (5) und der Grundkörper (1) ist mit einem Schwanz (6) versehen.

Zur weiteren Annäherung an die Gestalt eines Elefanten wird der Grundkörper (1) von vier Beinen (7) getragen, die beispielsweise in Form von Metallrohren ausgebildet sein können. Durch die Beine (7) hindurch kann ein Kaltwasserzufluß erfolgen. Im Inneren des Grundkörpers (1) kann ein Wasserspeicher angeordnet werden.

Die Anschlußleitung (2) kann zweiteilig ausgebildet werden. Beispielsweise ist es möglich, zwischen einem Übergang (8) und dem Kopf (4) eine starre Ausbildung in Form eines Metallrohres vorzusehen, hinter dem Übergang (8) kann die Anschlußleitung (2) als flexibler Schlauch verlaufen.

Zur Unterstützung einer individuellen Wasserabgabe können im Bereich des Kopfes (4) ein Kaltwasserhahn (9), und ein Warmwasserhahn (10) angeordnet sein. Ebenfalls ist es möglich, ein Mischventil (15) zur Erreichung einer beliebigen Wassertemperatur zu installieren. Der optische Eindruck eines realen Tieres wird durch Augen (11) und Stoßzähne (12) erhöht.

Zusätzlich zu einem Kaltwasserzufluß (13) kann auch ein Warmwasserzufluß (14) durch eines der Beine (7) hindurch vorgesehen werden. Es ist aber auch möglich, die Warmwasseraufbereitung durch Sonneneinwirkung auf die Oberfläche des Grundkörpers (1) durchzuführen.

Bei Verwendung eines Warmwasserzuflusses (14) kann die Wassererwärmung sowohl unter Verwendung der Solartechnik als auch unter Verwendung allgemeiner thermischer Energie durchgeführt werden. Denkbar ist auch die Kühlwassernutzung von Kraftwerken oder eine Wärmekopplung an Methangasanlagen.

Bei einer Verwendung einer Warmwasserversorgung unter Verwendung thermischer Energie ist insbesondere daran gedacht, aufgrund des Salzgehaltes derartigen Wassers einen Wärmetauscher zu verwenden und hierdurch einen Sekundärkreislauf bereitzustellen. Alternativ zur Verwendung der Wasserhähne (9, 10) ist es auch möglich, ein kombiniertes Mischventil (15) einzusetzen.

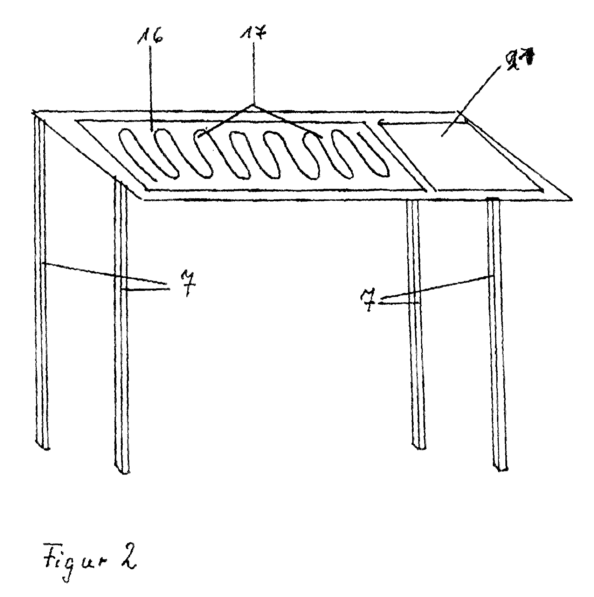

Fig. 2 zeigt einen Solarkollektor (16) in Form eines Daches. Im Bereich einer Kollektorfläche (17) können beispielsweise photovoltaische Zellen (21) zur Stromgewinnung für Umwälzpumpen angeordnet sein. Es ist aber auch möglich, eine unmittelbare Umsetzung von Strahlungswärme der Sonne in Wärmeenergie des Wassers durch Oberflächen von Rohrleitungen oder des Grundkörpers durchzuführen oder den Kollektor innerhalb des Grundkörpers derart anzuordnen, daß der Grundkörper bereichsweise eine durchsichtige Oberfläche erhält. Ein Anschluß des Solarkollektors (16) erfolgt an den Warmwasserzufluß (14) des Grundkörpers (1). Der erforderliche Wassertransport kann von einer Umwälzpumpe vorgenommen werden.

Ebenfalls ist es denkbar, sowohl eine unmittelbare Umsetzung der Sonnenstrahlung in Wärmeenergie zur Wasseraufbereitung als auch eine Verwendung von photovoltaischen Zellen (21) zur elektrischen Versorgung der Umwälzpumpe zu realisieren. Ein Betrieb der Umwälzpumpe kann aber auch mit Hilfe von Batterien oder gegebenenfalls über einen Netzanschluß durchgeführt werden. Bei der dargestellten dachartigen Ausführung des Solarkollektors (17) erfolgt eine Durchführung der erforderlichen Anschlüsse vorzugsweise über Stützpfeiler oder Wandelemente.

Alternativ zu der dargestellten dachartigen Ausführung des Solarkollektors (16) ist beispielsweise auch daran gedacht, eine Gestaltung in Form einer Bank durchzuführen oder dachartige Konstruktionen zu realisieren. Bei einer Gestaltung in Form einer Sitzbank ist auch daran gedacht, die gewonnene Wärmeenergie zur Beheizung der Sitzbank zu verwenden.

Darüber hinaus ist auch daran gedacht, in einer Umgebung des Grundkörpers (1) geflieste Sitzbänke anzuordnen, die von Wasserleitungen durchzogen sind und einen angenehmen Sitzkomfort bereitstellen. Die Beheizung der Sitzbänke kann außer durch die Wasserleitungen beispielsweise auch durch Installation eines Heizkörpers unterhalb der Bank erfolgen. Derartige Anordnungen können auch zur Realisierung von Speichereigenschaften herangezogen werden.

Die Besonderheit der Beheizbarkeit der Sitzbänke besteht darin, daß die hierfür benötigte Energie auf eine regenerative Quelle zurückzuführen ist.

Alternativ oder ergänzend zu einer Verwendung des Grundkörpers (1) als Speicher ist es auch denkbar, einen separaten Speicher einzusetzen, der unterirdisch oder oberirdisch installiert ist. Bei einer Anordnung des Speichers in einem Gebäude ist insbesondere auch daran gedacht, die Solaranlage im Dachbereich des Gebäudes zu installieren.

Eine weitere Vergrößerung der Speicherfähigkeit für Wärme kann dadurch erfolgen, daß innerhalb des Speichers ein Wärmeträgermaterial angeordnet wird. Hierzu können beispielsweise Glas, Altglas oder keramische Werkstoffe sowie Natriumsulfat oder Öl in einem Sekundärkreislauf verwendet werden.

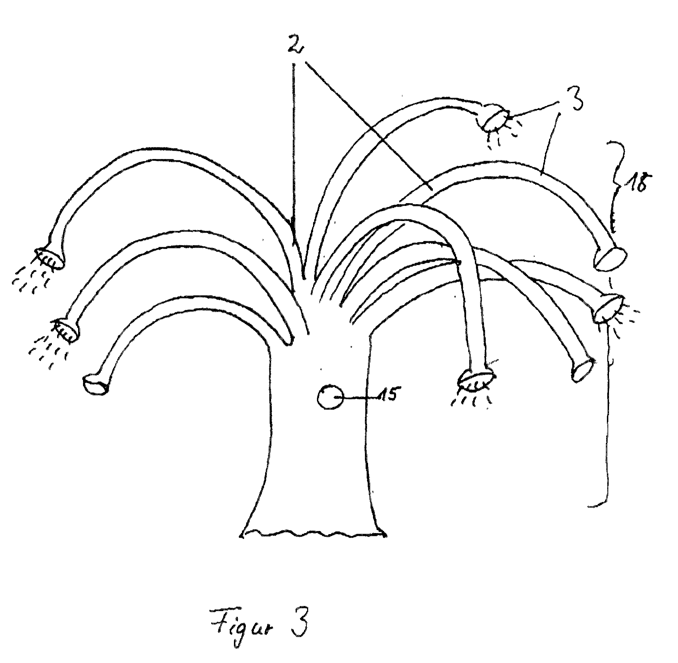

Fig. 3 zeigt eine Ausführungsform, bei der eine Gestaltung in Form eines Baumes vorliegt. Der Grundkörper (1) bildet hier den Stamm des Baumes aus und die Anschlußleitungen (2) verlaufen ähnlich zu Ästen und tragen an ihren Enden jeweils Sprühköpfe (3). Bei einer derartigen Ausführungsform ist insbesondere daran gedacht, jeder der Anschlußleitungen (2) ein separates Mischventil (15) zuzuordnen, welches sich in guter Erreichbarkeit befindet oder benutzerfreundlich zu bedienen ist.

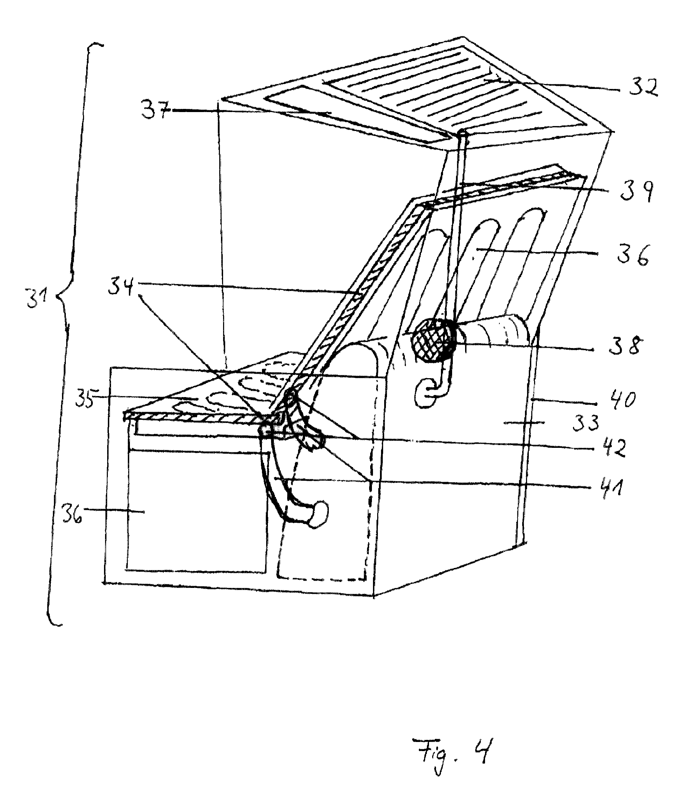

Fig. 4 zeigt einen Strandkorb (31), der mit einem Kollektor (32) versehen ist. Der Kollektor (32) ist hierbei im Bereich eines Daches des Strandkorbes (31) positioniert. Der Strandkorb (31) weist darüber hinaus einen Speicher (33) für Wasser auf. Der Speicher (33) kann in einen Warmwasserteil und in einen Kaltwasserteil separiert werden. Vorzugsweise ist der Speicher (33) im Bereich eines Sockels des Strandkorbes (31) angeordnet.

Der Strandkorb (31) weist darüber hinaus ein Sitzelement (34) auf, das typischerweise aus einer Sitzfläche und einer Rückenlehne besteht. Im Bereich des Sitzelementes (34) erstreckt sich eine Leitung (35), die typischerweise als eine Heizschlange ausgebildet ist. Durch die Leitung (35) hindurch fließt vom Kollektor (32) erwärmtes Wasser.

Der Strandkorb (31) ist darüber hinaus mit einem Fußteil (36) versehen, das als eine herausziehbare Schublade ausgebildet ist. Zusätzlich zum Kollektor (32) kann ein Fotovoltaikkollektor (37) verwendet werden, um eine Umwandlung von Sonnenstrahlung in elektrische Heizenergie durchzuführen. Zur Verbesserung einer Umwälzung ist eine Pumpe (38) verwendet. Zum Sitzelement (34) verläuft eine Zuflußleitung (39) mit erwärmtem Wasser. Zwischen dem Kollektor (32) und dem Speicher (33) ist eine Kaltwasserleitung (40) angeordnet. Zwischen dem Speicher (33) und dem Sitzelement (34) verläuft eine Warmwasserleitung (41). Eine Steuerung der Wärmeabgabe kann unter Verwendung eines Ventils (42) erfolgen, das vorzugsweise als ein Thermostatventil ausgebildet ist. Der Speicher kann mit einem Stutzen zum Nachfüllen und / oder Ablassen von Wasser ausgestattet werden.

Der Kollektor (32) kann beispielsweise positionierbar angeordnet sein, um einen möglichst optimalen Einfallwinkel der Sonnenstrahlung zu unterstützen. Das Sitzelement (34) kann gefliest oder mit Kunststoff beschichtet realisiert werden. Zur Unterstützung einer preiswerten Herstellung ist insbesondere daran gedacht, als Leitung (35) Heizschlangen oder vergleichbare Leitungselemente einer Fußbodenheizung zu verwenden.

In Zeiten hoher Sonneneinstrahlung ist es möglich, über die Ventilsteuerung eine Überhitzung im Bereich des Sitzelementes (34) durch Verminderung des Zuflusses oder durch Vermischung mit kaltem Wasser zu erreichen. Ebenfalls ist daran gedacht, direkt im Bereich des Kollektors (32) eine Einrichtung zur Vermeidung von Überhitzungen, beispielsweise ein Thermostatventil, zu installieren.

Alternativ zur Anordnung des Speichers (33) im Bereich des Strandkorbes (31) ist es auch möglich, eine externe Installation des Speichers (33) vorzunehmen und eine Verbindung mit dem Strandkorb (31) durch Rohre oder Schläuche zu realisieren. Bei einer derartigen Ausführungsform ist es ebenfalls möglich, mehrere Strandkörbe (31) an einen gemeinsamen Speicher (33) anzuschließen oder auch den Kollektor (32) extern zu positionieren. Bei einer derartigen externen Anordnung des Kollektors (32) kann für eine stets optimale Sonneneinstrahlung gesorgt werden.

Die Strandkörbe (31) können einsitzig oder mehrsitzig realisiert sein. Ebenfalls kann der Speicher (33) an eine oder mehrere der in Fig. 1 und Fig. 3 dargestellten Anordnungen angeschlossen werden.

## Patentansprüche

1. Vorrichtung zur Abgabe von erwärmtem Wasser, die eine Wasserversorgung und mindestens einen Sprühkopf aufweist, der von einer Anschlußleitung mit einem Grundkörper (1) verbunden ist, **dadurch gekennzeichnet, daß** der Grundkörper (1) mindestens bereichsweise eine Gestaltung entsprechend einer Skulptur aufweist.

2. Vorrichtung nach Anspruch 1, **dadurch gekennzeichnet, daß** der Grundkörper (1) mit einer Wassererwärmungseinrichtung gekoppelt ist.

3. Vorrichtung nach Anspruch 1 oder 2, **dadurch gekennzeichnet, daß** der Grundkörper (1) mit einem Solarkollektor (16) gekoppelt ist.

4. Vorrichtung nach Anspruch 1 oder 2, **dadurch gekennzeichnet, daß** der Grundkörper (1) mit einer thermischen Heizung gekoppelt ist.

5. Vorrichtung nach Anspruch 1 oder 2, **dadurch gekennzeichnet, daß** der Grundkörper (1) mit einer Kühlwasseranlage eines Kraftwerkes verbunden ist.

6. Vorrichtung nach Anspruch 1 oder 2, **dadurch gekennzeichnet, daß** der Grundkörper (1) mit einer Methangasanlage gekoppelt ist.

7. Vorrichtung nach einem der Ansprüche 1 bis 6 , **dadurch gekennzeichnet, daß** der Grundkörper (1) mit einem Wasserspeicher gekoppelt ist.

8. Vorrichtung nach Anspruch 7, **dadurch gekennzeichnet, daß** der Speicher innerhalb des Grundkörpers (1) angeordnet ist.

9. Vorrichtung nach einem der Ansprüche 1 bis 8 , **dadurch gekennzeichnet, daß** der Grundkörper (1) mindestens bereichsweise eine Ummantelung aus einem Isoliermaterial aufweist.

10. Vorrichtung nach einem der Ansprüche 1 bis 9, **dadurch gekennzeichnet, daß** die Anschlußleitung (2) mit mindestens einem Regulierventil gekoppelt ist.

11. Vorrichtung nach Anspruch 10, **dadurch gekennzeichnet, daß** das Regulierventil als ein Mischventil (15) ausgebildet ist.

12. Vorrichtung nach einem der Ansprüche 1 bis 11, **dadurch gekennzeichnet, daß** der Solarkollektor (16) räumlich getrennt vom Grundkörper (1) angeordnet ist.

13. Vorrichtung nach einem der Ansprüche 1 bis 12, **dadurch gekennzeichnet, daß** im Bereich des Wasserspeichers ein Wärmeträgermaterial angeordnet ist.

14. Vorrichtung nach Anspruch 13, **dadurch gekennzeichnet, daß** das Wärmeträgermaterial aus Glas ausgebildet ist.

15. Vorrichtung nach Anspruch 13, **dadurch gekennzeichnet, daß** das Wärmeträgermaterial aus Altglas ausgebildet ist.

16. Vorrichtung nach Anspruch 13, **dadurch gekennzeichnet, daß** das Wärmeträgermaterial aus einem keramischen Material ausgebildet ist.

17. Vorrichtung zur Warmwassererzeugung, die mindestens einen Kollektor zur Aufnahme von Sonnenenergie sowie mindestens einen Speicher zur Bevorratung von Wasser aufweist und die mit mindestens einer Leitung für erwärmtes Wasser versehen ist, **dadurch gekennzeichnet, daß** die Leitung (35) mindestens zum Teil im Bereich eines Sitzelementes (34) eines Strandkorbes (31) angeordnet ist.

18. Vorrichtung nach Anspruch 17, **dadurch gekennzeichnet, daß** das Sitzelement (34) mindestens eine Sitzfläche aufweist.

19. Vorrichtung nach Anspruch 17 oder 18, **dadurch gekennzeichnet, daß** das Sitzelement (34) mindestens eine Rückenlehne aufweist.

20. Vorrichtung nach einem der Ansprüche 17 bis 19, **dadurch gekennzeichnet, daß** die Leitung (35) mindestens bereichsweise als Heizschlange ausgebildet ist.

21. Vorrichtung nach einem der Ansprüche 17 bis 20, **dadurch gekennzeichnet, daß** der Kollektor (32) im Bereich eines Daches des Strandkorbes (31) angeordnet ist.

22. Vorrichtung nach einem der Ansprüche 17 bis 21, **dadurch gekennzeichnet, daß** ein zusätzlicher Fotovoltaikkollektor (37) verwendet ist.

23. Vorrichtung nach einem der Ansprüche 17 bis 22, **dadurch gekennzeichnet, daß** der Speicher (33) im Bereich eines Sockels des Strandkorbes (31) angeordnet ist.

24. Vorrichtung nach einem der Ansprüche 17 bis 23, **dadurch gekennzeichnet, daß** der Speicher (33) in einen Warmwasserteil und einen Kaltwasserteil separiert ist.

25. Vorrichtung nach einem der Ansprüche 17 bis 24, **dadurch gekennzeichnet, daß** für eine Wasserumwälzung mindestens eine Pumpe (38) verwendet ist.

26. Vorrichtung nach einem der Ansprüche 17 bis 25, **dadurch gekennzeichnet, daß** zur Temperatursteuerung mindestens ein Ventil (42) verwendet ist.

27. Vorrichtung nach einem der Ansprüche 1 bis 26, **dadurch gekennzeichnet, daß** im Speicher (33) mindestens zu einem Teil Natriumsulfat verwendet ist.

28. Vorrichtung nach einem der Ansprüche 1 bis 26, **dadurch gekennzeichnet, daß** im Grundkörper (1) mindestens zu einem Teil Natriumsulfat verwendet ist.
